Europäisches Patentamt

(19) European Patent Office

Office européen des brevets

(11) EP 0 853 283 A1

(12) EUROPEAN PATENT APPLICATION

(43) Date of publication:
15.07.1998 Bulletin 1998/29

(51) Int. Cl.⁶: G06F 13/28

(21) Application number: 97300113.4

(22) Date of filing: 09.01.1997

(84) Designated Contracting States:
DE FR GB

(71) Applicant:
Hewlett-Packard Company
Palo Alto, California 94304 (US)

(72) Inventor: McCarthy, Dominic Paul
South Gloucestershire BS17 6DB (GB)

(74) Representative:
Lawrence, Richard Anthony
Hewlett-Packard Limited,
IP Section,
Building 2,
Filton Road
Stoke Gifford, Bristol BS12 6QZ (GB)

(54) **Computer system with memory controller for burst transfer**

(57) A computer system comprises: a processing system (10, 12) for processing data; a memory (14) for storing data processed by, or to be processed by, the processing system; a memory access controller (16) for controlling access to the memory; and at least one data buffer (40) for buffering data to be written to or read from the memory. A burst controller (32) is provided for issuing burst instructions to the memory access controller, and the memory access controller is responsive to such a burst instruction to transfer a plurality of data words between the memory and the data buffer in a single memory transaction. A burst instruction queue is provided (30) so that such a burst instruction can be made available for execution by the memory access controller immediately after a preceding burst instruction has been executed. Each such burst instruction includes or is associated with a parameter defining a spacing between locations in the memory to be accessed in response to that burst instruction, and the memory access controller is responsive to such a burst instruction to transfer a plurality of data elements between the memory, at locations spaced in accordance with the spacing parameter, and the data buffer in a single memory transaction. The system is particularly applicable for processing media data which has high spatial locality and regularity, but low temporal locality, and enables high performance to be extracted from cheap memory.

FIG. 1

## Description

This invention relates to computer systems, and in particular, but not exclusively, to such systems for processing media data.

An optimal computer architecture is one which meets its performance requirements whilst achieving minimum cost. In a media-intensive appliance system, at present the main hardware cost contributor is memory. The memory must have enough capacity to hold the media data and provide enough access bandwidth in order that the computation throughput requirements can be met. Such an appliance system needs to maximise the data throughput, as opposed to a normal processor which usually has to maximise the instruction throughput. The present invention is concerned in particular, but not exclusively, with extracting high performance from low cost memory, given the restraints of processing media-intensive algorithms.

The present invention relates in particular to a computer system of the type comprising: a processing system for processing data; a memory (provided for example by dynamic RAM ("DRAM")) for storing data processed by, or to be processed by, the processing system; a memory access controller for controlling access to the memory; and a data buffer (provided for example by static RAM ("SRAM")) for buffering data to be written to or read from the memory.

At present, the cheapest form of symmetric read-write memory is DRAM. (By symmetric, it is meant that read and write accesses take identical times, unlike reads and writes with Flash memory.) DRAM is at present used extensively in personal computers as the main memory, with faster (and more expensive) technologies such as static SRAM being used for data buffers or caches closer to the processor. In a low cost system, there is a need to use the lowest cost memory that permits the performance (and power) goals to be met. In the making of the present invention, an analysis has been performed of the cheapest DRAM technologies in order to understand the maximum data bandwidths which could be obtained, and it is clear that existing systems are not utilising the available bandwidth. The present invention is concerned with increasing the use of the available bandwidth and therefore increasing the overall efficiency of the memory in such a computer system and in similar systems.

A typical processor can access SRAM cache in 10ns. However, an access to main DRAM memory may take 200ns in an embedded system, where memory cost needs to be minimised, which is a twentyfold increase. Thus, in order to ensure high throughput, it is necessary to place as much data in the local cache memory block before it is needed. Then, the processor only sees the latency of access to the fast, local cache memory, rather than the longer delay to main memory.

"Latency" is the time taken to fetch a datum from memory. It is of paramount concern in systems which are "compute-bound", i.e. where the performance of the system is dictated by the processor. The large factor between local and main memory speed may cause the processing to be determined by the performance of the memory system. This case is "bandwidth-bound" and is ultimately limited by the bandwidth of the memory system. If the processor goes fast enough compared to the memory, it may generate requests at a faster rate than the memory can satisfy. Many systems today are crossing from being compute-bound to being bandwidth-bound.

Using faster memory is one technique for alleviating the performance problem. However, this adds cost. An alternative approach is to recognise that existing memory chips are used inefficiently and to evolve new methods to access this memory more efficiently.

The term "burst efficiency" used in this specification is a measure of the ratio of (a) the minimum access time to the DRAM to (b) the average access time to the DRAM. A DRAM access involves one long access and (n-1) shorter accesses in order to burst n data items. Thus, the longer the burst, the more reduced the average access time (and so, the higher the bandwidth). Typically, a cache-based system (for reasons of cache architecture and bus width) will use bursts of four accesses. This relates to about 25 to 40% burst efficiency. For a burst length of 16 to 32 accesses, the efficiency is about 80%, i.e. about double.

The term "saturation efficiency" used in this specification is a measure of how frequently there is traffic on the DRAM bus. In a processor-bound system, the bus will idle until there is a cache miss and then there will be a 4-access burst to fetch a new cache line. In this case, latency is very important. Thus, there is low saturation efficiency because the bus is being used rarely. In a test on one embedded system, a saturation efficiency of 20% was measured. Thus, there is an opportunity of obtaining up to a fivefold increase in performance from the bus.

Combining the possible increases in burst efficiency and saturation efficiency, it may be possible to obtain about a tenfold improvement in throughput for the same memory currently used.

A first aspect of the present invention is characterised by: means for issuing burst instructions to the memory access controller, the memory access controller being responsive to such a burst instruction to transfer a plurality of data words between the memory and the data buffer in a single memory transaction; and means for queueing such burst instructions so that such a burst instruction can be made available for execution by the memory access controller immediately after a preceding burst instruction has been executed.

A second aspect of the invention is characterised by: means for issuing burst instructions to the memory access controller, each such burst instruction including or being associated with a parameter defining a spacing between locations in the memory to be accessed in response to that burst instruction, and the memory access controller being responsive to such a burst instruction to transfer a plurality of data elements between the memory, at locations spaced in accordance with the spacing parameter, and the data buffer in a single memory transaction.

Other preferred features of the invention are defined in the appended claims.

The present invention is particularly, but not exclusively, applicable only for certain classes of algorithm, which will be termed "media-intensive" algorithms. By this, it is meant an algorithm employing a regular program loop which accesses long arrays without any data dependent addressing. These algorithms exhibit high spatial locality and regularity, but low temporal locality. The high spatial locality and regularity arises because, if array item n is used, then it is highly likely that array item n+s will be used, where s is a constant stride between data elements in the array. The low temporal locality is due to the fact that an array item n is typically accessed only once.

Ordinary caches are predominantly designed to exploit high temporal locality by keeping data that is being used often close to the processor. Spatial locality is exploited, but only in a very limited way by the line fetch mechanism. This is normally unit stride and relatively short. These two reasons mean that caches are not very good at handling media-data streams. In operation, redundant data often replaces useful data in the cache and the DRAM bandwidth is not maximised. It is believed that traditional caches are ideally suited to certain data types, but not media data.

The main difference between the burst buffering of the invention and traditional caches is the fill policy, i.e. when (the first aspect of the invention) and how (the second aspect of the invention) to fill/empty the contents of the buffer.

In accordance with the invention, therefore, new memory interface structures (i.e. burst buffers) are proposed which may augment (i.e. sit alongside) a traditional data cache and may be used for accessing, in particular but not exclusively, media data. The use of DRAM or the like can then be optimised by exploiting the media data characteristics, and the data cache can operate more effectively on other data types, typically used for control. It also appears that the data cache size may be reduced, as the media data is less likely to cause conflicts with the data in the cache, without sacrificing performance. Possibly it may prove to be the case that the total additional memory required for the burst buffers is of the same magnitude as the savings in memory required for the data cache.

A system may contain several burst buffers. Typically, each burst buffer is allocated to a respective data stream. Since algorithms have a varying number of data streams, it is proposed to have a fixed amount of SRAM available to the burst buffers. This amount may be divided up into equal sized amounts according to the number of buffers required. For example, if the amount of fixed SRAM is 2 kByte, and if an algorithm has four data streams, the memory region might be partitioned into four 512 Byte burst buffers.

Another algorithm with six streams could be supported by dividing the memory into eight burst buffers each of 256 Bytes in size. In other words, where the number of data streams is not a power of two, the number of burst buffers is preferably the nearest higher power of two.

The control of this memory and the allocation (and freeing) of burst buffers may be handled at a higher level by either a software or hardware process. This process may include other architectural features such as the automatic renaming of burst buffers.

A specific embodiment of the invention will now be described by way of non-limiting example with reference to the accompanying drawings, in which:

Figure 1:     is a block diagram of an embodiment of computer system in accordance with the present invention; and

Figure 2A to 2D:   show four ways in which a burst buffer memory and burst instruction queue in the the system of Figure 1 may be configured under hardware or software control.

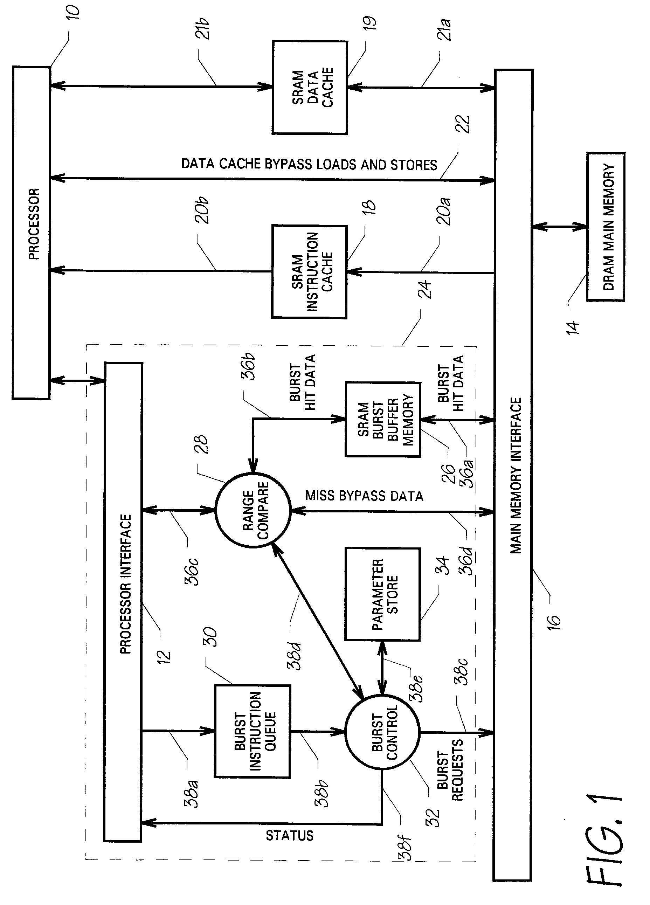

Referring to Figure 1, the computer system comprises as is known: a processor 10, such as an i960; main DRAM memory 14, such as EDO DRAM, with a main memory interface or access controller 16; a small SRAM instruction cache 18 with a path 20a from the memory interface 16 and a path 20b to the processor 10; an SRAM data cache 19 with a path 21a between the data cache 19 and the memory interface 16 and a path 21b between the data cache 19 and the processor 10; and a path 22 between the processor 10 and memory interfaces 16 for cache bypass processor loads and stores. Unlike a known computer system, a burst buffer system 24 is also provided, as enclosed by a dashed line in the drawing.

The burst buffer system 24 includes: (1) a processor interface 12, for example a co-processor for the processor 10; (2) a burst buffer memory 26 provided by a fixed amount of SRAM, for example 2 kBytes; (3) a range comparator 28 which can accept memory requests from the processor 10 and transparently (to the processor 10) determine whether the required data is resident in the burst buffer memory 26 or whether to initiate an access to the main memory 14 to fetch the data; (4) a burst instruction queue 30 in the form of at least one FIFO, which can receive burst instructions from the processor 10; (5) a burst controller 32 which is operable to evaluate the current system status, extract the next relevant burst instruction from the burst instruction queue 30 and issue that instruction or request to the main memory 14;

(6) a parameter store 34 which holds parameters relating to burst transfers and which may be updated by some specific burst instructions; (7) data paths 36a to 36d for the movement of data between the burst buffer memory 26 and the processor and memory interfaces 12, 16, including a data path 36d bypassing the burst buffer memory 26 for missed data; and (8) control paths 38a to 38f for the movement of status information and burst instructions within the burst buffer system 24 and to the processor and memory interfaces 12, 16.

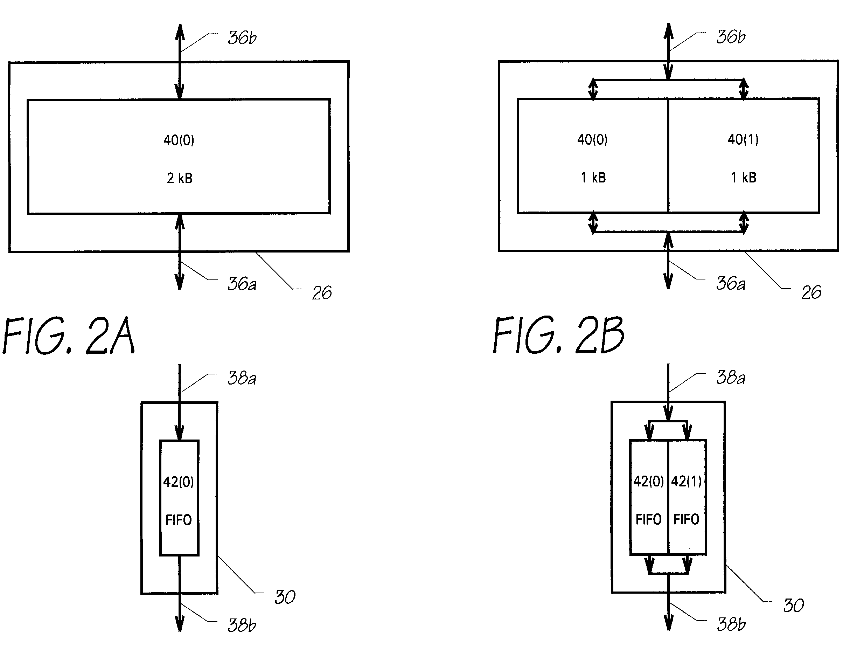

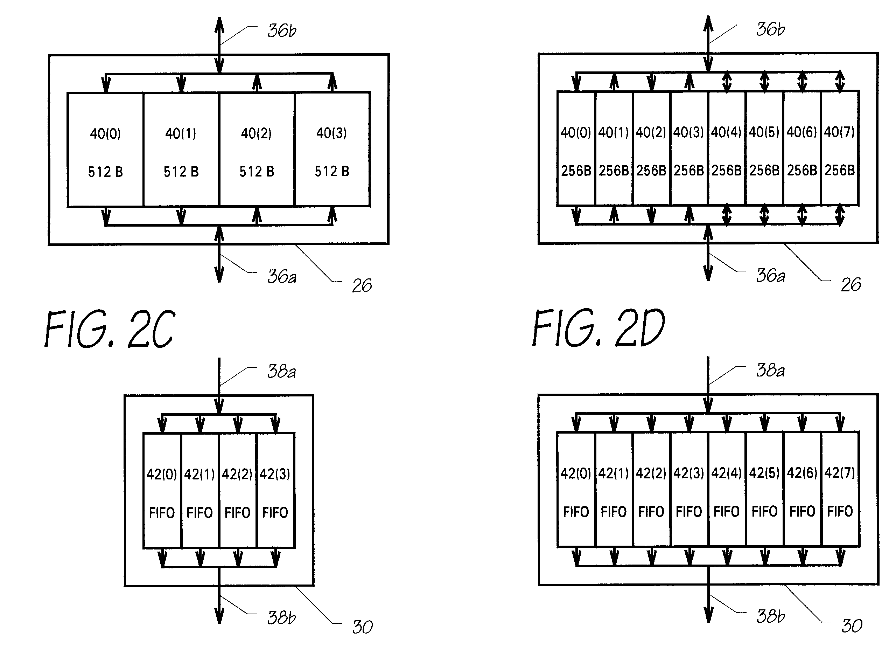

As shown in Figures 2A to 2D, the burst buffer memory 26 is configurable as a selectable number of buffers 40: for example as a single 2 kByte buffer 40(0), as shown in Figure 2A; as a pair of 1 kByte buffers 40(0), 40(1), as shown in Figure 2B; as four 512 Byte buffers 40(0) to 40(3), as shown in Figure 2C; and as eight 256 Byte buffers 40(0) to 40(7), as shown in Figure 2D. Also, each buffer may be arranged as an input buffer from the main memory 14 to the processor 10 (for example as for buffers 40(2), 40(3) in Figure 2C), as an output buffer from the processor 10 to the main memory 14 (for example as for buffers 40(0), 40(1) in Figure 2C), or as a bi-directional buffer (for example as for buffer 40(0) in Figure 2A). The burst instruction queue 30 is configured so as to have the same number of FIFOs 42 as the number of burst buffers 40, one for each burst buffer 40. The configuration of Figure 2A would be used when there is one data stream, of Figure 2B when there are two datastreams, of Figure 2C when there are three or four data streams, and of Figure 2D when there are between five and eight data streams. In an alternative arrangement, a single burst instruction queue FIFO 42 may be used whatever the number of burst buffers 40.

The processor 10 can operate on normal i960 instructions such as the load instruction "ld", which, with its parameters, takes the form:

ld(g5),r4

This instructs the processor to fetch the data word pointed to by the address in its register g5 and to place that data word in its register r4. However, in one embodiment of the invention, the instruction set is extended to include an equivalent "loadburst" instruction, which, with its parameters, takes the form:

loadburst *src,stride,size,buf*

This causes a burst of *size* data words to be transferred from the memory 14 to that one of the input or bidirectional burst buffers 40(*buf)* having the identity *buf*, beginning at address *src* in the memory 14, and with addresses incrementing by *stride* memory locations. There is also a corresponding "storeburst" instruction, which, with its parameters, takes the form:

storeburst *buf,src,stride,size*

This causes a burst of *size* data words to be transferred from that one of the output or bidirectional burst buffers 40(*buf)* having the identity *buf* to the memory 14, beginning at address *src* in the memory 14, and with addresses incrementing by *stride* memory locations.

The instructions loadburst and storeburst differ from normal load and store instructions in that they complete in a single cycle, even though the transfer has not occurred. In essence, the loadburst and storeburst instructions tell the memory interface 16 to perform the burst, but they do not wait for the burst to complete.

In the above system, the memory interface 16 must, within reason, be able to service burst requests with any size and stride. There must also be a high degree of coupling to the microprocessor 10, with the best solution being combined integration on the same chip. Memory requests from the processor 10 may be performed in several manners, two being: (a) using a memory-mapped register for the burst instruction queue 30; and (b) using a coprocessor interface to bypass the load/store mechanisms. The latter of these is preferred, but requires architectural features not always present in a processor. Using the latter model also requires the definition and use of new processor instructions.

One of the main advantages of a cache is that of transparent correctness. The correct data is always given to the processor and updated in main memory whenever appropriate, using hardware methods invisible to the processor. The burst buffer system 24 also provides similar functionality.

In the above system, the data in a burst buffer 40 is copied from a region of main memory 14. The location information (i.e. address, stride etc.) is compared against any memory request from the processor 10 to determine if it hits in the respective buffer 40. The comparison can be performed in a couple of ways: all addresses in the buffer 40 could be held and associatively compared by the range comparator 28 with processor address (as for normal cache tags); and an equation specifying the addresses in the buffer can be examined by the range comparator 28 using the processor address to see if it is a solution. The former is expensive (and gets even more expensive for higher speed) whereas the latter is cheap and fast, but restricts the stride to powers of two to obtain satisfactory performance.

A read hits in a buffer 40 if the address range comparison is true. In this case the datum is returned very quickly to the processor from the buffer. On the other hand, a read miss causes the required datum to be extracted from main memory 14 directly, bypassing the burst buffer memory 26. However, if the datum is in a range that is currently being loaded, the read is "stalled" or "blocked" until the range is loaded and then it is extracted from the buffer 40 and passed to the processor 10. (In a modification, the datum would be passed on as soon as it was received to save latency.) If the datum were in a burst that is due to be issued, then the read may again be blocked until the burst is performed in order to prevent the datum being read twice in close succession.

A write hit causes the datum in the respective buffer 40 to be updated. The main memory 14 is not updated at that time, but coherency with the main memory 14 is achieved under software control by performing a storeburst sometime later. On the other hand, a write miss causes the datum to be updated in the main memory 14 directly unless a storeburst is pending or active containing the same datum. In this case the write is blocked until after the storeburst has completed.

The burst controller 32 for issuing instructions to the memory interface 16 may use a mechanism which will be termed "deferral". This means that the time at which the Instruction is issued is deferred until some later time or event. For example, if the next instruction were a storeburst-deferred-16access, it would wait until 16 accesses into the burst buffer had been completed, and then automatically issue the store. Other deferral mechanisms may be based on: time (i.e. count cycles); events such as external interrupts; and buffer full/empty indicators. Using deferral on access count is a powerful feature of the burst buffer system 24 because it allows decoupling of the program flow and the issuance of instructions to the memory interface 16.

The burst buffer controller 32 provides status information back to the processor 10 on path 38f. It also provides a unique buffer identifier so that software-controlled buffer allocation and logical buffer renaming may be implemented.

If the length of a burst is longer than the size of the respective buffer 40, one procedure is to truncate the burst length so that it is the same as that of the buffer 40. However, in a modified procedure, a much longer stream is brought in through the buffer in bursts. A single instruction, such as loadstream-deferred-32access, could be used to bring in a much longer stream in chunks the size of the burst buffer, with each chunk being replaced by the next one after the specified number of accesses have been made.

An access mode which is not transparent to the processor 10 may also be supported. It is easiest to describe this as a first-in-first-out (FIFO) buffer. In this case, the processor 10 accesses the buffer 40 using a single address, which, on reads, "pops" the first element from the burst buffer 40. Subsequent reads work down through the whole buffer. Notions of full and empty now come into play. A more generic extension of this is to provide a "window" on to the buffer 40. This window effectively allows relative access to the buffer. After a fixed number of accesses in this window (or on some other trigger), the window is advanced such that its position is centralised over another datum. The amount of advancement may be programmed. This may be termed a "rotating window" method and many implementations are possible.

There now follows a description in greater detail of the operation of the burst buffer system 24.

The data in the buffer 40 is checked to be valid by comparing the requested address with the result from calculations using start address, length and stride information. There are no restrictions on length and stride values (apart from register size). However, for normal loadburst and storeburst instructions, if the length is greater than the buffer size, it will be truncated. The value read back from the register will be the truncated value. The range comparison may be quite slow unless address tags are also used. Range checking only considers the word address so that bits 0 and 1 are ignored.

A read hit in the buffer 40 causes the data item to be recovered. A miss causes a fetch from the main memory 14.

A write hit causes the appropriate buffer 40 to be updated. A write miss updates the main memory 14 directly. Coherency is maintained by finally writing the complete buffer 40 back to the main memory 14.

All data that may use a buffer 40 may be marked as "non-cacheable" to prevent coherency issues which would result if that data were also in a data cache. This means that the data cache must be restricted from line fetches in the same region of memory that contains data for the buffers 40.

Associated with each buffer 40 is a status register which may be read. This contains a valid bit which indicates whether the buffer is in use or not. The software may examine these flags to determine which buffers are available. Other status information including current operation status is also available.

Accesses to invalid buffers will simply cause normal memory loads and stores to be generated. The validity mechanism is transparent to software.

A loadburst instruction written to the queue 30 causes the target buffer to be filled with a burst of the specified characteristics. On issuing the loadburst instruction, the buffer is completely invalidated until the the fill operation has completed. Any data held in the buffer is irretrievably lost.

A storeburst instruction will cause the target buffer to be emptied with a burst of the specified characteristics. On issuing the storeburst instruction, the buffer is locked (i.e. all access is prevented) and is copied to memory. The buffer is then invalidated.

Both loadburst and storeburst instructions may be deferred. This means that a count is associated with each instruction which describes the number of reads and writes that must be performed in order to trigger the operation. (Other options include clock ticks and instruction counts.) This means that a storeburst deferred by 16 accesses could be issued to a buffer. The buffer controller would then wait for 16 accesses to the buffer, at which point the buffer is emptied.

A buffer may be made valid by an "allocbuffer" instruction. This instruction is similar to the loadburst instruction in that it provides address information to the range calculator, but does not cause a load of any data. This permits a buffer to be filled using processor writes rather than needing a previous loadburst. The allocbuffer instruction results in the buffer being made valid. The data contained in the buffer remains unchanged this means buffers full of data may be remapped over a different memory region.

There is an equivalent "freebuffer" instruction. This simply invalidates the buffer leaving its contents unchanged. A subsequent allocbuffer instruction could restore the buffer to its previous state.

The processor will stall under several conditions: (1) the buffer instruction queue is full and a burst instruction is issued; (2) a burst instruction is in progress and an access to the target buffer is requested; (3) a burst instruction misses in the buffer and a normal memory access must be performed.

If the length specified for a transfer is less than the length of the buffer, then a partial access is performed and the unused locations in the buffer are undefined.

Burst transfers are restricted in that they always empty in the order implied by the burst instruction. Partial accesses always begin at the first position in the buffer.

Since strides are a signed quantity, the order of the burst data will always be sequential, but either ascending or descending.

The number of buffers required by a particular application or system will vary depending on the performance needs, number of streams that need to be supported, etc.

Instructions are only executed on completion of the previous one.

A "storeburst value 0" command can be issued which causes the target memory region to be filled with zeros. The burst buffer itself is not zeroed, but a separate datapath writes the value 0 to the main memory. In an extension to this, any value may be allowed to be specified, and a register is provided which is set to the required value.

A "loadburst value 0" instruction causes the buffer to be filled with zeros (i.e. cleared). Although no memory traffic is generated, this operation is performed in the same manner and will take longer than a cycle. As such it should be handled just like any other loadburst instruction.

Provided the application can guarantee that a data stream meets the following conditions, it may be brought into memory automatically with the memory controller decomposing the stream into bursts. The conditions are: (1) each data element is brought in sequentially; (2) each data element is used either exactly once or in accordance with a predetermined usage pattern; (3) processing the stream in chunks of the buffer size is accommodated. If these conditions are met, a write stream or a read stream may be broken down into burst instructions deferred by the appropriate number of accesses. Whereas the length associated with a burst transfer is normally truncated to the buffer size, using the loadburst stream and storeburst stream instructions interprets the length as the stream length. These instructions may also be initially deferred, but this only affects the start of the first burst transfer. Subsequent bursts are automatically deferred by the size of the buffer.

A "burstabort" command may be used to abort a burst transfer. Its functionality is restricted in that is cannot terminate a burst in progress. However, if the burst is pending (i.e. deferred) it will be cancelled. In any case, the buffer is always made invalid. Its real use is for terminating a stream access in which case the stream is terminated at the end of the current burst or immediately if the burst is pending.

Considering now the firmware interface of the system, associated with each burst buffer 40 are four registers. These registers are memory-mapped and may be accessed by the processor with single-cycle loads and stores. The register names are: 1. base_address; 2. length; 3. stride; and 4. control/status. The former three registers contain the parameters used for burst instructions. The burst instructions are written to the control register and status information may be obtained by reading the control register. All registers are one word wide (i.e. 32 bits for this implementation). Each register will be described in turn below. In order to understand the relevance of the registers, it is necessary to define the function used to fetch data in a burst. Each element, i, in a burst transfer is fetched from an address in the main memory given by the following equation:

$$\text{Address[i]} = \text{base\_address} + (i-1)^*\text{stride} \qquad\qquad \text{(Equation 1)}$$

where i ranges from 1 to length.

Regarding the base_address register, before any burst instruction is issued, the base_address register must be initialised. When a burst instruction is issued, the base address is used to calculate the data addresses. The base address is never automatically changed, even for stream accesses.

Writes to the base_address register when a buffer is valid will make that buffer invalid. The register itself is shadowed by hardware to ensure that any active bursts are completed correctly, even though they are subsequently invalidated.

The base address is specified in bytes and must be word aligned. If it is not, the value is automatically truncated and no rounding is performed. The value read from the register is unaltered.

Regarding the length register, before any burst instruction is issued, the length register must be initialised. When a burst instruction is issued, the length is used to calculate the data addresses. For non-stream bursts, the length register is restricted to lengths that are less than or equal to the burst buffer length. If a burst instruction is issued and the value of the length register exceeds this criterion, it is automatically truncated to the buffer length. This truncation occurs as the burst instruction is issued, not when the write to the length register occurs. The truncated value will be the value subsequently read from this register.

For stream accesses, the length register specifies the length of the total stream transfer.

Writes to the length register when a buffer is valid will make that buffer invalid. The register itself is shadowed by hardware to ensure that any active bursts are completed correctly, even though they are subsequently invalidated.

The transfer length is measured in bytes, but is restricted to being a multiple of words (i.e. 4 bytes). Values that are not aligned to word boundaries will be truncated and no rounding is performed. The value read from the register is unaltered.

Regarding the stride register, before any burst instruction is issued, the stride register must be initialised. When a burst instruction is issued, the stride is used to calculate the data addresses. The stride is never automatically changed, even for stream accesses.

Writes to the stride register when a buffer is valid will make that buffer invalid. The register itself is shadowed by hardware to ensure that any active bursts are completed correctly, even though they are subsequently invalidated.

The stride is measured in bytes, but is restricted to being a multiple of words (i.e. 4 bytes). Values that are not aligned to word boundaries will be truncated and no rounding is performed. The value read from the register is unaltered.

Regarding the control/status register, all burst instructions are aliases of writes to the control register. The data used in these accesses is organised according to the formats defined for each instruction. The first 3 bits of the word are used to identify the instruction.

A description will now be made of the various burst instructions. First, an "allocbuffer" instruction is used to configure a buffer to map an area of memory. No burst is performed, but the buffer is made valid and range checking is performed. The length of the transfer must be less than or equal to the size of the buffer. Values greater than this will automatically be truncated to the buffer size. Range checking will compare against the set of addresses generated according to Equation 1 above. The format of the data word used to issue this instruction is:

allocbuffer:      [000] [29 reserved bits]

Because the data in a buffer remains in a buffer through invalidation, a buffer may be "remapped" by changing the buffer parameters and issuing a second allocbuffer instruction.

A "burstabort" instruction is used to abort burst instructions. A burst from memory into a buffer cannot be aborted once it is in progress. However, a deferred burst may be aborted whilst pending, and a loadstream command may be aborted on a burst boundary. In all cases, the buffer is made invalid. Any data in the buffer is left unchanged. The format for this instruction is:

burstabort:      [001][29 reserved bits]

A "freebuffer" instruction is used to invalidate the associated buffer. No parameters are used. The format is:

freebuffer:      [010][29 unused bits]

"Loadburst" and "storeburst" instructions are used to fetch a burst of data into the burst buffer and to write a burst of data into main memory, respectively. The length of the transfer must be less than or equal to the size of the buffer. Values greater than this will automatically be truncated to the buffer size. The burst addresses are generated according to the Equation 1 above. The formats of the data words used to issue these instructions are:

loadburst:      [011][V][12 reserved bits] [16 bit deferral_count]

storeburst:      [100][V][12 reserved bits][16 bit deferral-count]

where V is a value bit and indicates whether the data loaded into the buffer is all zeros (V=1) or real data from memory (V=0). The bottom 16 bits are the deferral count. If this value is greater than 0, the burst operation is deferred until deferral_count accesses have been made to the buffer. These accesses are either reads or writes. Transfers always are always word-aligned, both in start address, length and stride.

"Loadstream" and "storestream" commands are used to bring a complete data stream into the buffer and to copy a complete data stream from the buffer, respectively. The length of the stream is defined in the length register and limited to $2^{32}$ bytes. The buffer manager automatically decomposes the stream into a set of bursts that are transferred from memory to the buffer and to memory from the buffer, respectively. The filling of the buffer is automatically co-ordinated by hardware. Burst boundaries are detected using the deferral count. This means that a buffer is replaced by the next buffer in the sequence after a predefined number of accesses. No other mechanism for progressing through the stream is available, but it is possible to consider mechanisms that advance the stream using another instruction. For a stream of length L bytes, there are L/4S bursts of length S over a memory bus having a width of four bytes, plus a burst to bring in the remainder and to copy out the remainder, respectively. The length must be a multiple of 4 bytes or is truncated down to the nearest multiple. A loadstream value 0 will continually load zeros into the buffer and will not cause any real memory accesses. A storestream value 0 will continually load zeros into memory. The format for these instructions are:

loadstream: [101][V][12 reserved bits][16 bit deferral_count]

storestream: [110][V][12 reserved bits][16 bit deferral_count]

where V is as defined above. The bottom 16 bits are the deferral count.

A "querystatus" command is used to evaluate the condition of the associated burst buffer. It is the only read command supported for the buffers. The value returned is 0 if the buffer is not allocated and 1 if it is. Information regarding the current mapping may be obtained by reading the other registers. No other information is available.

Typical simple examples of the use of the burst buffer system 24 will now be described. First, it may be used as a local data buffer, wherein a region of memory the size of the buffer is mapped directly into a burst buffer 40. This may be done in two ways: (1) if the data is uninitialised, then the allocbuffer command may be used to get a buffer 40 and perform the address mapping; and (2) if the data is initialised in the main memory 14, then a loadburst command must be used to copy the data into the burst buffer 40. Once the mapping is done, the processor 10 may continue to access the same addresses and they will be captured by the buffer 40. At completion, or when the system needs to be made coherent, a storebuffer command is used. Second, burst buffer system 24 may be used as a look-up table. In much the same way as the local data buffer, the burst buffer 40 may be initialised with look-up table data using a loadburst command. References to addresses that hit in the buffer return the appropriate data. The table size is limited, although there is no reason why a bigger table could not partially reside in the buffer 40 and the rest in the main memory 14. If the area held in the buffer 40 is the most frequently used, then this will help improve performance. Coherency is not an issue in this case. Therefore, once the use of the table has been completed, a freebuffer command should be issued.

A possible restriction on the system described above is that the burst buffers 40 may not be able to be used as a simple FIFOs. Addresses must always be used to access data in the buffers. It would be possible to write a software "wrapper" which would make the buffer appear as if it were a FIFO. However, the deferral count may be used to emulate FIFO functionality in that load and store bursts may be deferred by the buffer size which would mean that a store burst would be issued when the buffer had been logically filled.

In typical operation of the embodiments described above, a burst of data is read from the main memory 14 into the burst buffer memory 26, processed by the processor 10 / processor interface 12 and returned to the burst buffer memory 26, and then written to the main memory 14. In another emodiment, instead of the processing being performed by the processor 10 / processor interface 12, it is instead performed by a dedicated computation engine which is connected to the burst buffer memory 26.

It will be appreciated that many other modifications may be made to the embodiments of the invention described above and within the scope of the invention.

**Claims**

1. A computer system comprising:

   a processing system (10, 12) for processing data;
   a memory (14) for storing data processed by, or to be processed by, the processing system;
   a memory access controller (16) for controlling access to the memory; and at least one data buffer (40) for buffering data to be written to or read from the memory;
   characterised by:
   means (32) for issuing burst instructions to the memory access controller, the memory access controller being responsive to such a burst instruction to transfer a plurality of data words between the memory and the data buffer in a single memory transaction; and
   means (30) for queueing such burst instructions so that such a burst instruction can be made available for execution by the memory access controller immediately after a preceding burst instruction has been executed.

2. A computer system as claimed in claim 1, wherein at least one of the burst instructions includes a deferral parameter, and wherein the burst instruction issuing means is operable to defer issuing such an instruction to the memory access controller in dependence upon the deferral parameter.

3. A computer system as claimed in claim 1 or 2, wherein each such burst instruction includes or is associated with a parameter defining a spacing between locations in the memory to be accessed in response to that burst instruction.

4. A computer system comprising:

   a processing system (10, 12) for processing data;
   a memory (14) for storing data processed by, or to be processed by, the processing system;
   a memory access controller (16) for controlling access to the memory; and
   at least one data buffer (26) for buffering data to be written to or read from the memory;
   characterised by:
   means (32) for issuing burst instructions to the memory access controller, each such burst instruction including or being associated with a parameter defining a spacing between locations in the memory to be accessed in response to that burst instruction, and the memory access controller being responsive to such a burst instruction to transfer a plurality of data elements between the memory, at locations spaced in accordance with the spacing parameter, and the data buffer in a single memory transaction.

5. A computer system as claimed in any preceding claim, further comprising comparison means (28) operable in response to a memory request from the processing system to determine whether a corresponding memory location is mapped to the data buffer, and if so to access the mapped location in the data buffer.

6. A computer system as claimed in any preceding claim, wherein at least one of the burst instructions relates to a number of data elements greater than that which can be stored in the data buffer at one time, and wherein in response to such an instruction the system is operable to perform a sequence of burst instructions.

7. A computer system as claimed in any preceding claim, wherein the number of such data buffers is configurable by the system under hardware or software control.

8. A computer system as claimed in any preceding claim, wherein the processing system includes a main microprocessor (10) and coprocessor (12) arranged to process the data in the data buffer.

9. A computer system as claimed in any of claims 1 to 7, wherein the processing system includes a main microprocessor (10) and a separate computation engine, the computation engine being arranged to process the data in the data buffer.

FIG. 1

EP 0 853 283 A1

FIG. 2A

FIG. 2B

EP 0 853 283 A1

36b

| 40(0) 512 B | 40(1) 512 B | 40(2) 512 B | 40(3) 512 B |

36a
26

# FIG. 2C

36b

| 40(0) 256B | 40(1) 256B | 40(2) 256B | 40(3) 256B | 40(4) 256B | 40(5) 256B | 40(6) 256B | 40(7) 256B |

36a
26

# FIG. 2D

38a

| 42(0) FIFO | 42(1) FIFO | 42(2) FIFO | 42(3) FIFO |

38b
30

38a

| 42(0) FIFO | 42(1) FIFO | 42(2) FIFO | 42(3) FIFO | 42(4) FIFO | 42(5) FIFO | 42(6) FIFO | 42(7) FIFO |

38b
30

**European Patent Office**

## EUROPEAN SEARCH REPORT

Application Number

EP 97 30 0113

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 91 11767 A (AUSPEX SYSTEMS, INC.) | 1 | G06F13/28 |
| Y | * page 52, line 13 - page 61, line 7 * | 2,3 | |
| | --- | | |
| X | GB 2 250 615 A (APPLE COMPUTER, INC.) | 4 | |
| Y | * page 10, line 21 - page 11, line 26 * | 2,3 | |
| | --- | | |
| A | EP 0 447 145 A (HEWLETT-PACKARD COMPANY) * column 8, line 40 - column 10, line 26 * | 1-9 | |
| | --- | | |
| A | EP 0 549 924 A (INTERNATIONAL BUSINESS MACHINES CORPORATION) * column 2, line 3 - column 5, line 9 * | 1-9 | |
| | ----- | | |

TECHNICAL FIELDS
SEARCHED      (Int.Cl.6)

G06F

The present search report has been drawn up for all claims

| Place of search | Date of completion of the search | Examiner |
|---|---|---|
| THE HAGUE | 29 April 1997 | Jones, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)